# EUROPÄISCHE PATENTSCHRIFT

(11) **EP 3 201 894 B1**
(45) Veröffentlichungstag und Bekanntmachung des Hinweises auf die Patenterteilung: **12.09.2018**
(21) Anmeldenummer: 15770840.5
(22) Anmeldetag: 22.09.2015
(51) Int. Cl.: G08C 25/00, H04Q 9/00

(54) **VORRICHTUNG ZUM SENDEN UND EMPFANGEN EINES SENSORSIGNALS**
DEVICE FOR TRANSMITTING AND RECEIVING A SENSOR SIGNAL
DISPOSITIF D'ÉMISSION ET DE RÉCEPTION D'UN SIGNAL DE CAPTEUR

(30) Priorität: 01.10.2014 DE 102014114316
(43) Veröffentlichungstag der Anmeldung: 09.08.2017
(73) Patentinhaber: KNORR-BREMSE Systeme für Nutzfahrzeuge GmbH, 80809 München (DE)
(72) Erfinder: HERGES, Michael, 80935 München (DE); KLEPPE, Johannes, 80636 München (DE); WOERNER, Dieter, 75031 Eppingen (DE)
(86) Internationale Anmeldenummer: PCT/EP2015/071697
(87) Internationale Veröffentlichungsnummer: WO 2016/050558

(56) Entgegenhaltungen:
- EP-A1- 0 446 453
- DE-A1- 10 337 045
- DE-A1-102011 052 095
- DE-U1- 20 121 466
- US-A1- 2007 135 983
- Pascal Traverse ET AL: "IFIP/WCC/Toulouse AIRBUS FLY-BY-WIRE A TOTAL APPROACH TO DEPENDABILITY Presented by", , 1. August 2004 (2004-08-01), XP055229800, Gefunden im Internet: URL:http://webhost.laas.fr/TSF/IFIPWG/Top3 /07-Traverse.pdf [gefunden am 2015-11-19]

## Beschreibung

Die vorliegende Erfindung bezieht sich auf eine Sendevorrichtung und eine Empfangsvorrichtung zum Senden und Empfangen eines Sensorsignals und insbesondere auf Vorrichtungen und ein Verfahren, die eine Überprüfung der Übertragung von Sensorsignalen, insbesondere für kritische Anwendungen in Fahrzeugen, sicherstellen.

### Hintergrund

Immer mehr Funktionen in Fahrzeugen werden elektronisch gesteuert und kontrolliert. Die Steuerung umfasst zunehmend auch sicherheitsrelevante Komponenten des Fahrzeugs, wo ein Fehlverhalten nicht tolerierbar ist. Dies bezieht sich beispielsweise auf das Erfassen von Pedalstellungen wie beispielsweise des Bremspedal oder eine Lenkung in einem Fahrzeug, wo an elektronischen Steuerungen hohe Anforderungen gestellt werden.

Insbesondere muss dabei sichergestellt werden, dass die Messwerte: (i) nicht verfälscht und (ii) aktuell sind. Im Falle eines Fehlers an irgendeiner Stelle der Messkette ist es wichtig, dass dieser Fehler sicher und schnell erkannt wird.

Um trotzdem ein hohes Maß an Sicherheit zu bieten, weisen konventionelle Signalerfassungs- und Übertragungseinrichtungen eine Redundanz auf, indem die vorhandenen Komponenten doppelt ausgeführt sind, so dass beim Versagen einer der Komponenten, die entsprechende physikalische Größe immer noch sicher und zuverlässig erfasst und verarbeitet wird. Die konventionellen Lösungen messen die physikalische Größe über zwei vollständig verschiedene Signalpfade, einschließlich von doppelt ausgeführten Mikrokontrollern, um Fehler in einem der Signalpfade über eine Plausibilitätsanalyse der beiden Signale zu erkennen.

Diese konventionelle Herangehensweise weist jedoch den Nachteil auf, dass durch das Duplizieren der vorhandenen Komponenten der Aufwand hoch ist, und darüber hinaus zusätzlicher Platz erforderlich ist, um die doppelte Ausführung der Komponenten unterzubringen.

DE 103 37 045 A1 offenbart eine bekannte Vorrichtung zum Erzeugen eines Sensorsignals, das für einen Im-Betrieb-Test eines Signalpfades von einer Sensorzelle zu einer Auswertestelle geeignet ist. Die Vorrichtung umfasst eine Einrichtung zum Bereitstellen eines Testsignals und eine Einrichtung zum Verändern eines Sensorsignals basierend auf dem Testsignal gemäß einer vorbestimmten Veränderungsvorschrift, um das Sensorsignal entsprechend zu ändern.

Daher liegt der vorliegenden Erfindung die Aufgabe zugrunden, eine Alternative zu schaffen, die einerseits ein sicheres Erfassen einer physikalischen Größe wie beispielsweise eine Pedalstellung ermöglicht, andererseits jedoch auch ein Fehlverhalten oder einen Ausfall eines Teiles der Signalverarbeitung und Signalweiterleitung sicher detektiert und somit das gleiche Maß an Sicherheit bietet, wie redundante Systeme dies ermöglichen.

### Zusammenfassung

Die oben genannte Aufgabe wird durch eine Sendevorrichtung nach Anspruch 1, eine Empfangsvorrichtung Anspruch 9 und ein Verfahren nach Anspruch 14 gelöst. Die abhängigen Ansprüche beziehen sich auf vorteilhafte Weiterbildungen der Gegenstände der unabhängigen Ansprüche.

Die vorliegende Erfindung bezieht sich auf eine Sendevorrichtung zum Senden eines Sensorsignals bezüglich einer physikalischen Größe. Die Sendevorrichtung umfasst die folgenden Merkmale: eine Eingangsschnittstelle zur Eingabe des Sensorsignals; einen Signalgenerator zur Erzeugung eines Vergleichssignals; eine Datenverarbeitungseinheit und eine Ausgangsschnittstelle. Die Datenverarbeitungseinheit ist ausgebildet, um das Sensorsignal und das Vergleichssignal zu einem modifizierten Sensorsignal zu kombinieren. Die Ausgangsschnittstelle ist an einen Signalpfad koppelbar, um das modifizierte Sensorsignal auszugeben. Das Vergleichssignal ändert sich zeitlich in vorbestimmter Weise über einen Wertebereich, um einen Empfänger in die Lage zu versetzen, ein fehlerhaftes Sensorsignal oder eine fehlerhafte Übermittlung unter Nutzung des übertragenen Vergleichssignals zu detektieren.

Somit basiert die vorliegende Erfindung darauf, dass nicht nur (zumindest) ein Sensorsignal übertragen wird, sondern dass zusammen mit dem (zumindest) einen Sensorsignal ein Vergleichssignal übertragen wird, wobei das Vergleichssignal eine vorbestimmte Form aufweist, welches zur Fehlerdetektion genutzt werden kann. Aus einer korrekten Übertragung der vorbestimmten Form des Vergleichssignals kann geschlossen werden, dass der Übertragungspfad und die Datenverarbeitung für das (zumindest) eine Sensorsignale fehlerfrei arbeitet. Beispielsweise kann das Vergleichssignal zusammen mit dem Sensorsignal kombiniert werden, und zwar noch bevor eine mögliche Digitalisierung und Datenverarbeitung beginnt, so dass beide Signale der gleichen Verarbeitung ausgesetzt werden, deren eventuellen Fehler über das Vergleichssignal erkennbar werden.

Im Rahmen der vorliegenden Erfindung ist ein Sensorsignal weit auszulegen. Es kann sich auf alle kontinuierlichen oder digitalen oder diskreten Signale beziehen und nicht notwendigerweise ein konstantes oder zeitlich begrenztes Signal sein. Es kann vielmehr einen beliebigen Signalverlauf aufweisen. Diskrete Signale können beispielsweise durch eine Abtastung einer kontinuierlichen physikalischen Größe entstehen. Allgemein ist ein Sensorsignal als eine Funktion der Zeit zu verstehen und bezieht sich nicht nur auf einen bestimmten Zeitpunkt, sondern weist einen allgemeinen Zeitverlauf auf.

Ebenso ist als Vergleichssignal jedes Signal zu verstehen, welches eine vorbestimmte Form hat. Beispielsweise kann die vorbestimmte Form durch eine bestimmte Funktion realisiert werden, wie beispielsweise eine Sinuskurve oder eine Sägezahnkurve oder durch eine andere vorbestimmte Funktion definiert sein. Somit ist auch das Vergleichssignal nicht so zu verstehen, dass es lediglich zu einem bestimmten Zeitpunkt eine Information sendet, sondern einen zeitlichen Verlauf aufweist kann, der sich zeitlich in einer vorbestimmten Weise ändert. Um als Prüfsignal zu dienen, sollte das Vergleichssignal vorhersagbar sein und sollte nicht zu jeweiligen Sensorwerten korrelieren, d.h. es sollte unabhängig von den konkreten Sensorwerten sein, die von einer Betätigung des Nutzers abhängen. Jedoch kann, wie es weiter unten beschrieben wird, der Wertebereich und eine mögliche Periodendauer von zu erwartenden Sensorsignalen abhängen.

Das Kombinieren kann sich auf jedes beliebiges Zusammenführen der Signale beziehen. Beispielsweise umfasst das Kombinieren ein Multiplex bezüglich der Zeit, der Phase oder des Codes oder auch ein Modulieren der Signale. Das Kombinieren soll stets so verstanden werden, dass es ein beliebiges Zusammenführen der Signale umfasst, so dass die Signale sich nicht untereinander stören, wie es durch übliche Multiplexverfahren möglich ist.

Das modifizierte Signal ist so zu verstehen, dass es zu keiner Modifikation des Sensorsignals und/oder des Vergleichssignal kommen muss. Stattdessen können diese Signale zu einem Datenstrom, der dem modifizierten Signal entspricht, zusammengeführt werden. Dies kann durch einen Zeit-Mulitplex geschehen, so dass jedes Signal eigene Zeitabschnitte (slot) zugewiesen bekommt, in denen es übertragen wird.

Optional nimmt in weiteren Ausführungsbeispielen das Sensorsignal in Abhängigkeit von der physikalischen Größe Werte in einem Sensorbereich an und der Signalgenerator ist ausgebildet, das Vergleichssignal derart zu erzeugen, dass der Wertebereich den Sensorbereich umfasst.

Dadurch kann sichergestellt werden, dass über die gesamte Bandbreite der zu übertragenden Sensorgrößen eine genaue und korrekte Verarbeitung der Signale erfolgt.

Optional ist in weiteren Ausführungsbeispielen ein Analog-Digital-Wandler umfasst, der ausgebildet ist, das Sensorsignal und das Vergleichssignal in ein digitales Signal auf gleiche Weise zu wandeln. Das digitale Signal kann optional weiter verarbeitet werden, bevor es durch die Ausgangsschnittstelle, die eine digitale Schnittstelle ist, ausgegeben wird.

Optional ist in weiteren Ausführungsbeispielen der Signalgenerator ausgebildet, um das Vergleichssignal zeitlich periodisch mit einer vorbestimmten Periodendauer zu erzeugen. Die Abtastrate des Analog-Digital-Wandlers und/oder die Periodendauer kann derart gewählt werden, dass aufeinanderfolgende Abtastungen des Vergleichssignals sich um nicht mehr als eine vorbestimmte Anzahl von Digitalisierungsschritte unterscheiden.

Beispielsweise kann die vorbestimmte Anzahl 10, 5, 3 oder 1 sein. Hiermit wird es möglich, dass möglichst alle oder möglichst viele Digitalisierungsschritte durch das Vergleichssignal überprüft werden können.

Um dies möglichst effizient zu gewährleisten ist optional die Datenverarbeitungseinheit ausgebildet, die Periodendauer des Vergleichssignals über ein Steuersignal zu steuern.

Optional umfassen weitere Ausführungsbeispiele einen Multiplexer (einen Kombinierer), wobei der Multiplexer ausgebildet ist, um das Sensorsignal und das Vergleichssignal miteinander zu kombinieren und an den Analog-Digital-Wandler auszugeben.

Der Multiplexer ist beispielsweise ein Zeit-Multiplexer, der das Sensorsignal und das Vergleichssignal zeitlich getrennt voneinander in den Datenstrom leitet. Der Analog-Digital-Wandler kann unter Nutzung der Schaltfrequenz des Multiplexers nach der Digitalisierung das digitalisierte Sensorsignal und das digitalisierte Vergleichssignal in verschiedene Register schreiben, so dass das digitalisierte Sensorsignal und das digitalisierte Vergleichssignal weiter verarbeitet werden können. Am Schluss können die verarbeiteten digitalen Signale wieder zusammen gebracht werden (z.B. durch ein erneutes Multiplexing) und über den Signalpfad zum Empfänger übertragen werden, wozu beispielsweise ein CAN Bus (controller area network, Steuerbereichsnetzwerk) genutzt werden kann. Die genutzten Multiplexverfahren können gleich sein, brauchen es aber nicht. In jedem Fall sollten aus dem Signalstrom, der am Empfänger ankommt, eindeutig die Ursprungssignale separierbar sein.

Optional umfasst in weiteren Ausführungsbeispielen das Sensorsignal ein erstes Sensorsignal und ein zweites Sensorsignal, die beide die physikalische Größe erfassen und die beide zueinander gegenläufig sind. Damit wird erreicht, dass eine Änderung der physikalischen Größe zu gegenläufigen Auswirkungen auf das erste Sensorsignal und auf das zweite Sensorsignal führt. Die Datenverarbeitungseinheit kann das erste Sensorsignal und das zweite Sensorsignal und das Vergleichssignal verarbeiten und zu dem modifizierten Sensorsignal kombinieren. Dazu kann die Verarbeitungseinheit optional einen weiteren Multiplexer aufweisen.

Durch das Übertragen von zwei Sensorsignalen zu zwei Sensoren wird sichergestellt, dass die Sensorerfassung korrekt verlaufen ist. Insbesondere führt die gegenläufige Sensorerfassung ebenfalls zu einem gegenläufigen Resultat (z.B. beim Empfänger). Dies kann getestet werden und, wenn dies nicht der Fall ist, kann daraus geschlossen werden, dass einer der beiden Sensoren einen Fehler aufweist (jener, der kein gegenläufiges Resultat liefert) oder ein Kurzschluss vorliegt.

Optional nimmt in weiteren Ausführungsbeispielen das erste Sensorsignal Werte in einem ersten Sensorbereich und das zweite Sensorsignal Werte in einem zweiten Sensorbereich an. Der erste Sensorbereich und der zweite Sensorbereich können beispielsweise derart gewählt werden, dass eine oder jede beliebige Mittelung von Werten des ersten Sensorbereiches mit Werten des zweiten Sensorbereiches zu Durchschnittswerten führt, die außerhalb des ersten Sensorbereiches und außerhalb des zweiten Sensorbereiches liegen. Ein solcher Wert kann als ungültig festgestellt werden, da er außerhalb eines gültigen Bereiches liegt. Daher kann die Datenverarbeitungseinheit ausgebildet sein, um solche Durchschnittswerte als ungültige Sensorwerte zu detektieren und einen Fehler auszugeben.

Die Durchschnittswerte können beispielsweise durch einen Kurzschluss des ersten Sensorsignals mit dem zweiten Sensorsignal erzeugt werden. In einem solchen Fall wären beide Sensorpfade miteinander verbunden (so dass sich beispielsweise die Spannungsniveaus auf einen Mittelwert angleichen) oder liegen gemeinsam auf Masse.

Optional umfassen weitere Ausführungsbeispiele eine Rückkopplung von der Datenverarbeitungseinheit zur Eingabe des ersten Sensorsignals und des zweiten Sensorsignals, um entweder das erste Sensorsignal oder das zweite Sensorsignal um einen vorbestimmten Wert zu ändern. Die Datenverarbeitungseinheit ist optional ausgebildet, einen Fehler festzustellen, wenn in Antwort auf die Änderung eines der beiden Sensorsignale sich beide Sensorsignale ändern sollten.

Sollte beispielsweise ein Kurzschluss vorliegen (z.B. wenn beide Sensorsignale auf eine gleiche Spannung liegen), wird die Änderung des einen Sensorsignals dazu führen, dass sich in gleicher Weise auch das zweite Signal ändert (oder es wird keinen Einfluss haben, wenn beide Signale auf Masse liegen).

Optional ist es ebenfalls möglich, über die Rückkopplung beide Signale zu ändern, aber auf unterschiedliche Weise, so dass die Datenverarbeitungseinheit eine bestimmte Änderung erwartet und wenn diese ausbleibt, einen Fehler feststellen kann.

Optional ist in weiteren Ausführungsbeispielen die Datenverarbeitungseinheit ausgebildet, um das erste Sensorsignal mit einem ersten Algorithmus zu verarbeiten und das zweite Sensorsignal mit einem zweiten Algorithmus zu verarbeiten und das Vergleichssignal mit einem dritten Algorithmus zu verarbeiten. Der erste Algorithmus und der zweite Algorithmus und der dritte Algorithmus können gleich sein. Ebenfalls möglich ist, dass der erste und dritte Algorithmus gleich sind und der zweite Algorithmus verschieden ist. Wenn der erste bis dritte Algorithmus gleich ist, kann beispielsweise der zweite Algorithmus einen anderen Maschinencode aufweisen als der erste und der dritte Algorithmus (die einen gleichen Maschinecode aufweisen können). Ebenfalls möglich ist, dass der Algorithmus für das zweite Sensorsignal gleich ist zu dem Algorithmus für das erste Sensorsignal und gleich ist zu dem Algorithmus für das Vergleichssignal, jedoch verschieden implementiert ist.

Die unterschiedlichen Algorithmen können beispielsweise dadurch realisiert werden, dass einerseits eine Berechnung durch eine Funktion erfolgt und andererseits eine Berechnung über eine Nachschlagetabelle erfolgt. Eine weitere Möglichkeit für eine Verwendung von unterschiedlichen Algorithmen liegt in der Nutzung von unterschiedlichen Funktionen. Hiermit wird es möglich, dass neben Hardware-Fehler in der Datenverarbeitungseinheit ebenfalls Fehler im Compiler oder bei der Programmierung erkannt werden können.

Optional ist in weiteren Ausführungsbeispielen die Datenverarbeitungseinheit weiter ausgebildet, um einen Nachrichtenzähler und/oder eine Kontrollsumme zu erzeugen und dem modifizierten Sensorsignal hinzuzufügen. Der Nachrichtenzähler und die Kontrollsumme können ausgebildet sein, um einen Fehler während einer Übertragung auf dem Signalpfad zu detektieren und/oder zu lokalisieren (z.B. im Datenstrom).

Optional ist in weiteren Ausführungsbeispielen die Datenverarbeitungseinheit ausgebildet, um eine Versatzkorrektur und/oder eine Linearisierung und/oder eine Kalibrierung des Sensorsignals durchzuführen. Die Kalibrierdaten können zumindest einmal gespeichert werden. Eine Kalibrierung bezieht sich beispielsweise auf eine Umsetzung der physikalischen Messgröße (z.B. Umfang/Grad einer Betätigung eines Pedals) in elektrisehe Signale (z.B. Spannungsniveaus). Der Versatz bezieht sich beispielsweise auf eine Abweichung von Anfangs- und Endwerten. Beispielsweise kann der Wertebereich der physikalischen Größe in dem elektrischen Signal verschoben sein (Anfangswerte werden nicht aufeinander abgebildet).

In weiteren Ausführungsbeispielen kann die Datenverarbeitungseinheit an eine erste Zeitbasis koppeln und weist eine Überwachungseinheit auf, die an eine zweite Zeitbasis koppelbar ist. Die Überwachungseinheit ist beispielsweise ausgebildet, um einen Fehler infolge einer fehlerhaften Zeitbasis festzustellen, wozu die zweite Zeitbasis genutzt werden kann. Optional wird eine entsprechende Fehlermeldung auszugeben.

Optional ist in weiteren Ausführungsbeispielen Sendevorrichtung ausgebildet, um das erste Sensorsignal von einem ersten Sensor und das zweite Sensorsignal von einem zweiten Sensor zu empfangen, wobei der erste Sensor und der zweite Sensor einen Zustand einer Fahrzeugkomponente (z.B. Stellung eines Aktuators wie beispielsweise ein Pedal) detektieren.

Die vorliegende Erfindung bezieht sich auch auf eine Empfangsvorrichtung zum Empfangen eines modifizierten Sensorsignals von der zuvor beschriebenen Sendevorrichtung. Die Empfangsvorrichtung umfasst die folgenden Merkmale: eine Eingangsschnittstelle, eine Erfassungseinheit (Extrahiereinrichtung) zum Erfassen (Extrahieren) eines Vergleichssignals, eine Auswerteeinheit zur Auswertung des Vergleichssignals und einen Fehlerdetektor. Die Eingangsschnittstelle ist koppelbar an den Signalpfad, um das modifizierte Sensorsignals zu empfangen. Die Auswerteeinheit hat Zugriff auf Informationen über ein gültiges Vergleichssignal, um eine Ungültigkeit des Vergleichssignals basierend auf einen Vergleich der Informationen zu dem erfassten Vergleichssignals festzustellen. Der Fehlerdetektor ist ausgebildet, um einen Fehler festzustellen, wenn das Vergleichssignal ungültig ist.

Beispielsweise umfasst die Erfassungseinheit eine Demultiplexer, der das modifizierte Sensorsignal in seine Bestandteile zerlegt, wobei die Bestandteile alle Komponenten umfassen können, die durch die Sendevorrichtung kombiniert wurden.

Optional umfasst in weiteren Ausführungsbeispielen die Empfangsvorrichtung eine Einrichtung zum Abfragen von Kalibrierwerten, wobei die Kalibrierwerte von der Sendevorrichtung oder einem Speicher erfragt werden können. Die Kalibrierdaten können genutzt werden, um einen Wert der physikalischen Größe aus dem Sensorsignal zu ermitteln.

In weiteren Ausführungsbeispielen ist die Erfassungseinheit ausgebildet, die Prüfsumme und/oder den Nachrichtenzähler aus dem modifizierten Sensorsignal zu extrahieren. Die Auswerteeinheit ist optional ausgebildet, um Störungen auf dem Signalpfad aus Abweichungen in der Prüfsumme festzustellen und um fehlerhafte Abschnitte in dem modifizierten Sensorsignals beispielsweise mittels des Nachrichtenzählers zu ermitteln.

Optional ist in weiteren Ausführungsbeispielen die Auswerteeinheit ausgebildet, um eine Form des gültigen Vergleichssignals von der Sendevorrichtung zu empfangen und zu speichern.

In weiteren Ausführungsbeispielen kann optional Summierung des ersten Sensorsignals 105a und des zweiten Sensorsignals 105b in der Empfangsvorrichtung durchgeführt werden, um einen gemeinsamen Fehler (common mode error) zu eliminieren. Insbesondere, wenn beide Sensorsignale 105 gegenläufig sind, kann hiermit sehr effizient ein gemeinsamer Fehler ausgeschlossen werden.

Die vorliegende Erfindung bezieht sich ebenfalls auf ein System mit einer zuvor beschriebenen Sendevorrichtung, einer zuvor beschriebenen Empfangsvorrichtung und einem Signalpfad, der die Sendevorrichtung mit der Empfangsvorrichtung verbindet.

Weitere Ausführungsbeispiel beziehen sich ebenfalls ein Fahrzeug mit dem genannten System, um eine Position eines Aktuators sicher an eine elektronische Steuereinheit (ECU) zu übertragen.

Die vorliegende Erfindung bezieht sich ebenfalls auf ein Verfahren zum sicheren Übertragen eines Sensorsignals bezüglich einer physikalischen Größe. Das Verfahren umfasst die folgenden Schritte: Erzeugen eines Vergleichssignals, das sich in vorbestimmter Weise über einen Wertebereich zeitlich ändert; Kombinieren des Sensorsignals und des Vergleichssignals zu einem modifizierten Sensorsignal; Übertragen des modifizierten Sensorsignals über einen Signalpfad; Empfangen des modifizierten Sensorsignals durch einen Empfänger; Erfassen des Vergleichssignals aus dem modifizierten Sensorsignals; Vergleichen des erfassten Vergleichssignals mit Informationen über ein gültiges Vergleichssignal, um eine Ungültigkeit des erfassten Vergleichssignals basierend auf dem Vergleich der Informationen zu dem erfassten Vergleichssignals festzustellen; und Feststellen eines Fehlers in der Übertragung des Sensorsignals, wenn das Vergleichssignal ungültig ist.

Dieses Verfahren kann ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor läuft.

Somit bieten Ausführungsbeispiele der vorliegenden Erfindung den Vorteil, dass keine Verdopplung aller Komponente erforderlich ist, sondern, dass mit der vorhandenen zwei Sensoren eine sichere und zuverlässige Datenübertragung der beiden Sensorgrößen erfolgen kann und dass ein Fehlverhalten sofort feststellbar ist.

Die Erfindung stellt somit eine kostengünstige Sensoreinheit zur Messung einer physikalischen Größe für ein Steuergerät/Aktuator bereit, die ein sicheres "fail silent" Verhalten ermöglicht (d.h. im Fehlerfall erfolgt keine Ausgabe und es kann nicht zu einer Fehlsteuerung kommen).

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispielen, die jedoch nicht so verstanden werden sollten, dass sie die Offenbarung auf die spezifischen Ausführungsbeispielen einschränkt, sondern lediglich der Erklärung und dem Verständnis dienen.
- Fig. 1: zeigt ein Ausführungsbeispiel für eine Sendevorrichtung.
- Fig. 2: zeigt ein Ausführungsbeispiel für eine Empfangsvorrichtung.
- Fig. 3: zeigt weitere optionale Komponenten der Sendevorrichtung gemäß weiterer Ausführungsbeispiele.
- Fig. 4: zeigt ein Flussdiagramm für ein Verfahren zur sicheren Übertragung eines Sensorsignals.

### Detaillierte Beschreibung

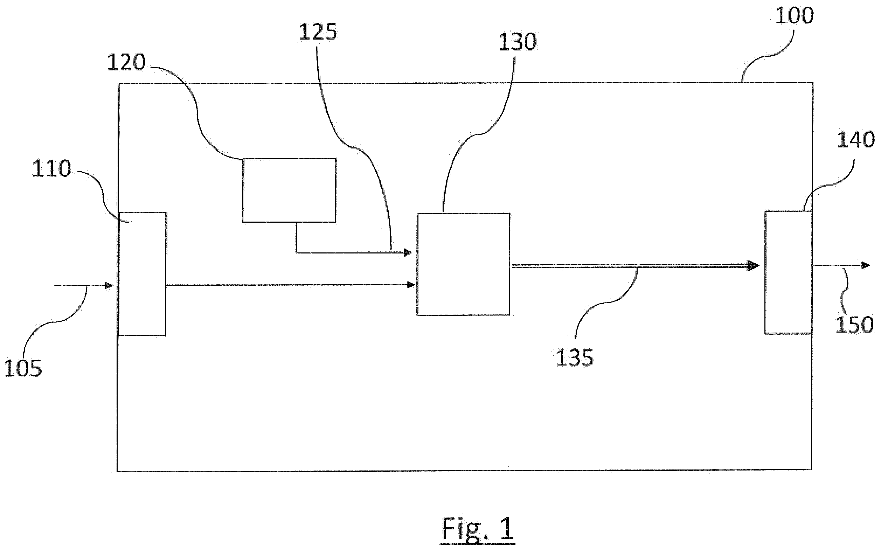

Fig. 1 zeigt ein Ausführungsbeispiel der vorliegenden Erfindung für eine Sendevorrichtung 100 zum Senden eines Sensorsignals 105 zu einer physikalischen Größe, die durch einen Sensor (nicht gezeigt) erfasst wird. Die Sendevorrichtung 100 umfasst folgende Merkmale: eine Eingangsschnittstelle 110 zum Empfangen des Sensorsignals 105, einen Signalgenerator 120 zur Erzeugung eines Vergleichssignals 125, eine Datenverarbeitungseinheit 130 und eine Ausgangsschnittstelle 140. Die Datenverarbeitungseinheit 130 ist ausgebildet, um das Sensorsignal 105 und das Vergleichssignal 125 zu verarbeiten und zu einem modifizierten Sensorsignal 135 zu kombinieren (z.B. über einen Multiplexer). Die Ausgangsschnittstelle 140 ist an einen Signalpfad 150 koppelbar, um das modifizierte Sensorsignal 135 auf dem Signalpfad 150 auszugeben. Das Vergleichssignal 125 ändert sich zeitlich in vorbestimmter Weise über einen Wertebereich, um einen Empfänger (Empfangsvorrichtung) in die Lage zu versetzen, ein fehlerhaftes Sensorsignal oder eine fehlerhafte Übermittlung mittels des Vergleichssignals 125 zu detektieren.

Dazu kann die Sendevorrichtung 100 Informationen über das Vergleichssignal 125 an den Empfänger liefern oder von dem Empfänger ein gewünschtes Vergleichssignal 125 erhalten, sodass der Empfänger nach einem Extrahieren des Vergleichssignals 125, das erhaltene Vergleichssignal mit den Informationen vergleichen kann und basierend darauf einen Fehler feststellen kann.

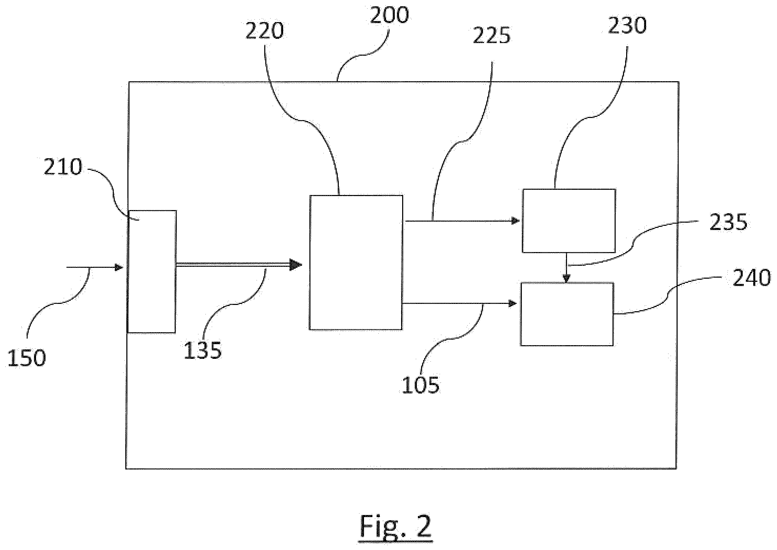

Fig. 2 zeigt ein Ausführungsbeispiel der vorliegenden Erfindung für eine Empfangsvorrichtung 200 zum Empfangen des modifizierten Sensorsignals 135 von der Sendevorrichtung 100. Die Empfangsvorrichtung 200 umfasst die folgenden Merkmale: eine Eingangsschnittstelle 210, Erfassungseinheit 220 zum Erfassen eines Vergleichssignals 225, eine Auswerteeinheit 230 zum Auswerten des erfassten Vergleichssignals 225 und einen Fehlerdetektor 240. Die Eingangsschnittstelle 210 koppelt an den Signalpfad 150, um das modifizierte Sensorsignals 135 zu empfangen. Die Auswerteeinheit 230 hat Zugriff auf Informationen zu einem gültigen Vergleichssignal 125, um eine Ungültigkeit des erfassten Vergleichssignals 225 basierend auf dem Vergleich der Informationen zu dem erfassten Vergleichssignals 225 festzustellen. Der Fehlerdetektor 240 ist ausgebildet, um einen Fehler in der Übertragung des Sensorsignals 105 festzustellen, wenn das erfasste Vergleichssignals 225 ungültig ist.

Beispielsweise kann die Empfangsvorrichtung 200 einen Speicher aufweisen, der Informationen zu dem gültigen Vergleichssignal 125 speichert. Diese Informationen können beispielsweise den funktionalen Verlauf, die Periodendauer, Anstiege und ähnliche Informationen umfassen, die eine Verifikation des Vergleichssignals ermöglichen.

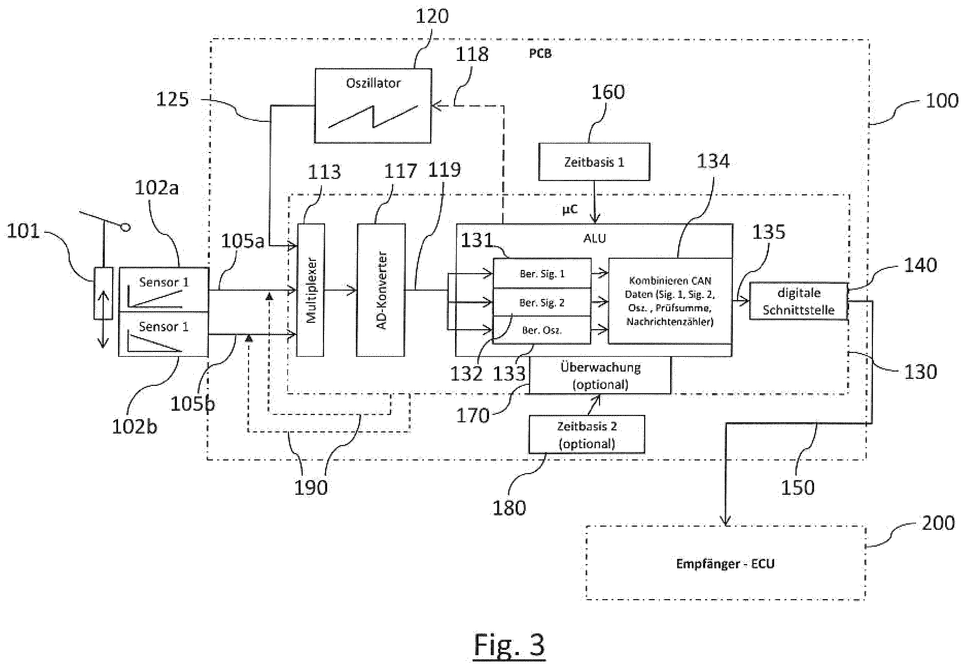

Fig. 3 zeigt ein System mit einer Sendevorrichtung 100 und eine Empfangsvorrichtung 200, die mit einem Signalpfad 150 miteinander verbunden sind, wobei die Sendevorrichtung 100 weitere optionale Komponenten aufweist. Die Sendevorrichtung 100 kann beispielsweise auf ein PCB (printed circuit board, Leiterplatte) ausgebildet sein.

Die Sendevorrichtung 100 koppelt an einen ersten Sensor 102a und einen zweiten Sensor 102b, die beide eine Sensorgröße zu einem Aktuator 101 erfassen. Der Aktuator 101 kann beispielsweise ein Pedal sein, dessen Betätigung bzw. lineare Bewegung festgestellt werden soll. Der erste Sensor 102a erfasst die Aktuatorgröße durch ein erstes Signal 105a, welches durch die Sendevorrichtung 100 erfasst wird. Der zweite Sensor 102b (oder weiterer Sensor) erfasst die gleiche Aktuatorgröße und gibt ein zweites Sensorsignal 105b an die Sendereinrichtung 100 aus. In dem Ausführungsbeispiel der Fig. 3 sind die Sensorgrößen 105a, 105b des ersten Sensors 102a und des zweiten Sensors 102b zueinander gegenläufig. Dies bedeutet, dass eine stärkere Betätigung des beispielhaften Pedals 101 bei der ersten Sensorgröße 105a beispielsweise zu einer Erhöhung des Sensorsignals führt, währenddessen die gleiche Betätigung des Pedals 101 bei dem zweiten Sensor 102b zu einem kleineren Sensorsignal führt.

Bei weiteren Ausführungsbeispielen sind der erste Sensor 102a und der zweite Sensor 102b ausgebildet, einen jeweiligen Wertebereich für das erste Sensorsignal 105a und das zweite Sensorsignal 105b zu erzeugen, die sich nicht wechselseitig überlappen. Beispielsweise könne die beiden Wertebereiche derart ausgewählt werden, dass ein Durchschnitt der Sensorwerte des ersten Sensorsignals 105a und des zweiten Sensorsignals 105b außerhalb beider Wertebereiche liegt. Beispielsweise kann der erste Wertebereich sich von 4 bis 6 Volt erstrecken und der zweite Wertebereich sich zwischen 10 und 12 Volt erstrecken. Eine solche Wahl bietet den Vorteil, dass ein Kurzschluss beider Sensorsignale zu einem Spannungsniveau führen würde, dass im Bereich zwischen 7 und 9 Volt liegt. Da dieser Bereich außerhalb der beiden Wertebereiche (zwischen 4...6 V und 10...12 V) liegt, zeigt das Auftreten eines solchen Sensorsignals klar einen Fehler an. Es versteht sich, dass die genannten Spannungswerte lediglich der Veranschaulichung dienen und nicht einschränkend auszulegen sind. Vielmehr können in anderen Ausführungsbeispielen, diese Werte anders gewählt werden.

Die Sendevorrichtung 100 weist eine Datenverarbeitungseinheit 130 (mit einem Multiplexer 113, einem Analog-Digital-Wandler 117 und einer optionalen Überwachungseinheit 170), einen Signalgenerator 120, eine erste Zeitbasiseinrichtung 160, eine optionale zweite Zeitbasiseinrichtung 180 und eine digitale Schnittstelle 140 auf.

Der Signalgenerator 120 ist ausgebildet, um das Vergleichssignal 125 zu erzeugen, wobei der Signalgenerator 120 optional über ein Steuersignal 118 durch die Datenverarbeitungseinheit 130 steuerbar ist. Beispielsweise ist der Signalgenerator 120 ausgebildet, ein periodisches Vergleichssignal 125 (beispielsweise in Form eines Sägezahnmusters oder einer harmonischen Schwingung) zu erzeugen. Das beispielhafte periodische Signal weist beispielsweise eine Amplitude auf, in der ein Wertebereich des ersten und/oder zweiten Sensorsignals 105a, 105b enthalten ist. Das bietet den Vorteil, dass das Vergleichssignal sämtliche Pegelwerte der Sensorsignale 105 prüfen kann. Für eine vorgegebene Amplitude kann die Änderungsrate des periodischen Vergleichssignals über die Periodendauer eingestellt werden. Vorteilhafterweise wird die Periode des Vergleichssignals 125 dabei derart gewählt, dass zu einer gegebenen Abtastfrequenz möglichst alle digitale Abtastwerte geprüft werden (z.B. indem sich das Vergleichssignal 125 von einer Abtastung zur nächsten Abtastung um nicht mehr als einen Quantisierungsbetrag bei der Digitalisierung ändert). Somit ist eine Änderung der Vergleichssignals 125 vorteilhafterweise an eine digitale Abtastung angepasst.

Die entsprechende Steuerung des Signalgenerators 120 kann über das Steuersignal 118 durch die Datenverarbeitungseinheit 130 erfolgen, d.h. die Amplitude und die Periodendauer des Vergleichssignals 125 kann durch die Datenverarbeitungseinheit 130 entsprechend gewählt werden. Sie sollten sich jedoch nicht dynamisch mit dem Sensorsignal 105 ändern, sondern vorbestimmt sein.

Das Vergleichssignal 125 wird zusammen mit dem ersten Sensorsignal 105a und dem zweite Sensorsignal 105b in den Multiplexer 113 eingegeben. Der Multiplexer ist ausgebildet, das Vergleichssignal 125 von der Signalgenerator 120, das erste Sensorsignal 105a und das zweite Sensorsignal 105b miteinander zu kombinieren und an den Analog-Digital-Wandler 117 weiterzugeben. Der Analog-Digital-Wandler 117 ist ausgebildet, das kombinierte Signal des Multiplexers 113 in ein digitales Signal 119 zu wandeln und an eine weitere Datenverarbeitung weiterzuleiten. Die Datenverarbeitung verarbeitet das digitalisierte Signal 119 in ein modifiziertes Sensorsignal 135 und gibt dieses an die digitale Schnittstelle 140 aus. Die digitale Schnittstelle 140 koppelt an den Signalpfad 150, der die Sendevorrichtung 100 mit der Empfangsvorrichtung 200 verbindet, so dass das modifizierte Sensorsignal 135 durch die Empfangsvorrichtung 200 empfangen wird.

Die erste Zeitbasiseinrichtung 160 (z.B. ein Zeit- oder Taktgeber) kann ein Zeitsignal der Datenverarbeitungseinheit 130 bereitstellen. Ferner umfasst die Sendevorrichtung 100 optional die Überwachungseinrichtung 170, die eine Überwachung der Verarbeitung durch die Datenverarbeitungseinrichtung 130 bereitstellt. Die Überwachungseinrichtung 170 ist beispielsweise ausgebildet, um mögliche Fehler in der Datenverarbeitung zu detektieren und zu signalisieren. Außerdem ist optional die zweite Zeitbasiseinrichtung 180 in der Sendevorrichtung 100 vorgesehen, die ein zweites Zeitsignal für die Überwachungseinrichtung 170 liefert, sodass ein Fehler in der Zeitbasiseinrichtung 160 erkennbar wird.

In dem Ausführungsbeispiel der Fig. 3 ist die Datenverarbeitungseinheit 130 ausgebildet, das erste Sensorsignal 105a durch einen ersten Algorithmus 131 (z.B. in einer ersten Berechnungseinheit) zu verarbeiten. Außerdem umfasst die Datenverarbeitungseinheit 130 eine zweite Berechnungseinheit zur Verarbeitung des zweiten Sensorsignals 105b durch einen zweiten Algorithmus 132 und eine dritte Berechnungseinheit zur Verarbeitung des Vergleichssignals 125 durch einen dritten Algorithmus 133.

Die Algorithmen umfassen beispielsweise eine Umwandlung des digitalisierten physikalischen Wertes, der beispielsweise einem Weg eines Pedals entspricht, in entsprechende digitale Daten, die übertragen werden. Außerdem können die Algorithmen eine Versatzkorrektur, eine Linearisierung (z.B. Abbildung der linearen Wegstrecke auf ein lineares Signalniveau), eine Kalibrierung mit Kalibrierdaten zusätzlich vornehmen.

Außerdem umfasst die Datenverarbeitungseinheit 130 einen Kombinierer 134, der ausgebildet ist, nach der Berechnung/Verarbeitung durch die erste bis dritte Berechnungseinheiten 131, 132, 133, die erhaltenen Resultate zu kombinieren. Der Kombinierer 134 kann optional dem kombinierten Resultat eine Prüfsumme und einen Nachrichtenzähler hinzuzufügen. Die Prüfsumme ist beispielsweise ausgebildet, eine Authentizität der Signale oder Signalwerte bereitzustellen, während der Nachrichtenzähler die einzelnen Nachrichten zählt, um dadurch ein Feststellen von fehlenden oder fehlerhaften Nachrichten zu ermöglichen. Insbesondere kann damit eine Lokalisierung des Fehlers erfolgen.

Optional ist eine Rückkopplung 190 von der Datenverarbeitungseinheit 130 auf das erste Sensorsignal 105a und das zweite Sensorsignal 105b ausgebildet. Über diese Rückkopplung kann gezielt eines der beiden Sensorsignale geändert werden, so dass basierend auf der erfolgten Änderung darauf geschlossen werden kann, ob die beiden Sensorsignale nach der Analog-Digital-Wandlung gültige Sensorsignale sind oder nicht. Beispielsweise kann durch eine gezielte Änderung von nur einem der beiden Sensorsignale 105 festgestellt werden, ob ein Kurzschluss zwischen den beiden Sensorsignalen 105 besteht, da ein Kurzschluss zwangsläufig dazu führen würde, dass sich beide Sensorsignale 105 ändern würden, selbst dann, wenn nur eines variiert wird.

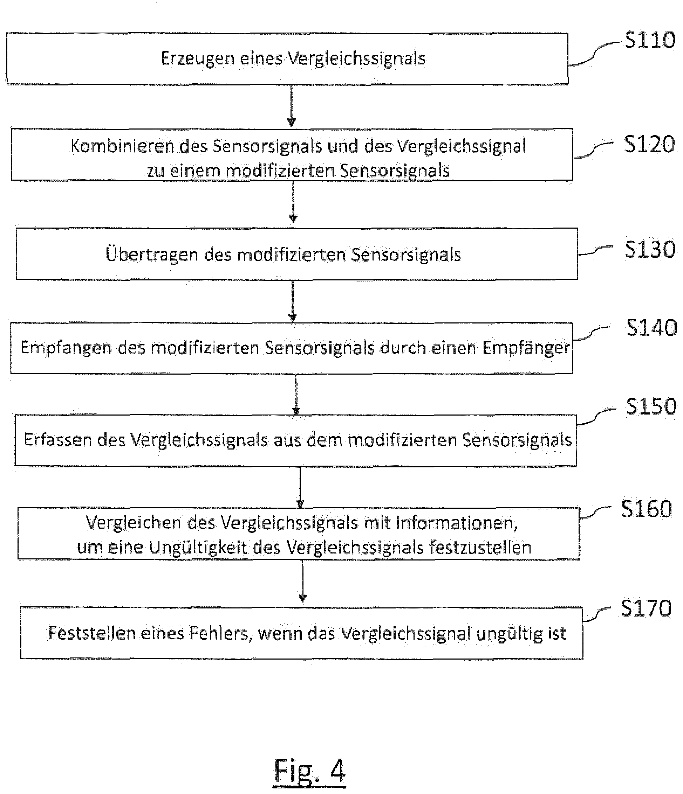

Fig. 4 zeigt ein Flussdiagramm für ein Verfahren zum sicheren Übertragen eines Sensorsignals 105 bezüglich einer physikalischen Größe gemäß der vorliegenden Erfindung.

Das Verfahren umfasst die Schritte: Erzeugen S110 eines Vergleichssignals 125, das sich in vorbestimmter Weise über einen Wertebereich zeitlich ändert; Kombinieren S120 des Sensorsignals 105 und des Vergleichssignal 125 zu einem modifizierten Sensorsignal 135; Übertragen S130 des modifizierten Sensorsignals 135 über einen Signalpfad 150; Empfangen S140 des modifizierten Sensorsignals 135 durch einen Empfänger; Erfassen S150 des Vergleichssignals 225 aus dem modifizierten Sensorsignals; Vergleichen S160 des erfassten Vergleichssignals 225 mit Informationen über ein gültiges Vergleichssignal 125, um eine Ungültigkeit des erfassten Vergleichssignals 225 basierend auf einen Vergleich der Informationen zu dem erfassten Vergleichssignals 225 festzustellen; und Feststellen S170 eines Fehlers in der Übertragung des Sensorsignals 105, wenn das erfasste Vergleichssignal 225 ungültig ist. Der Fehler kann optional einem Nutzer signalisiert werden.

Das Verfahren kann ebenfalls Computer-implementiert sein, d.h. es durch Anweisungen umgesetzt sein, die auf einem Speichermedium gespeichert sind und in der Lage sind die Schritte des Verfahrens auszuführen, wenn es auf einen Prozessor läuft. Der Programmsoftwarecode/Anweisungen, der zu dem Flussdiagramm gehört, umfasst typischerweise eine oder mehrere Anweisungen, die auf unterschiedliche Art auf unterschiedlichen Medien in oder peripher zu einer Steuereinheit (mit einem Prozessor) gespeichert sind, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens notwendig sind.

Auf das Feststellen eines Fehlers, kann dieses Ereignis einen Nutzer mitgeteilt werden. Alternativ oder zusätzlich ist jedoch ebenfalls möglich, dass das einmalige Auftreten eines Fehlers lediglich zum Erneuten Senden des Sensorsignals 105 führt, d.h. die physikalische Größe wird nochmals erfasst und übermittelt. Erst wenn der Fehler bestehend bleibt, kann dies zu einer Fehlermeldung führen, so dass der Nutzer daraus die geeigneten Konsequenzen ziehen kann.

Verschiedene Aspekte der vorliegenden Erfindung können auch wie folgt zusammengefasst werden:
Der grundsätzliche Erfindungsgedanke basiert auf einer geschickten Aufteilung der Überwachung zwischen einer Sensoreinheit (mit der Sendevorrichtung 100) und einem Zentral/Aktuator Steuergerät (mit der Empfangsvorrichtung 200) sowie einer Messung eines zusätzlichen, selbst generierten Signals (Vergleichssignal 125) mit einem bekanntem Verlauf. Damit wird es möglich, das Sensorelement mit nur einem Mikrokontroller "Fail silent" fähig zu gestalten. Bei zwei Sensorelementen können durch geeignete Wahl des Signalverlaufs weitere denkbare Fehler sicher erkannt werden.

Dadurch wird ein Mikrocontroller eingespart und die Hardware-Kosten verringern sich. Zusätzlich wird der Energiebedarf sowie Bauraum und Platinenplatz verringert, was wiederum zu verringerten Herstellungs- und Betriebskosten führt.

Gemäß der vorliegenden Erfindung enthält die Sensoreinheit ein oder zwei Sensoren mit analogem Ausgangssignal (Sensorsignal 105) und ein bekanntes Signal (Vergleichssignal 125), das beispielsweise eine Sägezahn-Form, eine Sinus-Form, ein PT1-Signal aufweisen kann und das sich in dem gesamten Signalbereich der Sensoren 101 periodisch ändert. Der Signalbereich und die Periodendauer sind dem Sensorgerät und/oder dem Zentral/Aktuator Steuergerät bekannt.

Vorteilhafterweise kann die Periodendauer und die Abtastrate so gewählt werden, dass die Änderung von Abtastung zu Abtastung so gering ist, sodass möglichst wenige Werte des A/D Wandlers zwischen Abtastungen liegen. Bei einem frei laufenden periodischen Signal ist durch Asynchronität sichergestellt, dass über eine bestimmte Zeit alle A/D Werte auftreten auch wenn die Abtastfrequenz so gewählt ist, dass sich der Wert zwischen den Abtastungen um mehr als ein Inkrement ändert. Damit kann geprüft werden, ob die Berechnung mit allen möglichen A/D Werten korrekt durchgeführt wurde.

In einer anderen Ausführung kann die Periode vom Mikrocontroller (Datenverarbeitungseinheit 130) des Sensorsteuergeräts (Sendevorrichtung 100) bestimmt werden. Dazu kann das Steuersignal 118 genutzt werden.

Die Signale können vom Mikrocontroller über einen A/D Wandler (Analog-Digital-Wandler 117) mit vorgeschaltetem Multiplexer 113 digitalisiert werden. Da das bekannte periodische Signal 125 den gesamten Eingangsbereich periodisch durchfährt, ist eine Prüfung des A/D Wandlers 117 auf Fehler (Linearität, absolut Wert, fehlerhaften Code, ...) möglich.

Die digitalisierten Werte können über die Schnittstelle 140 zur weiteren Verarbeitung an das Zentral/Aktuator Steuergerät 200 übertragen werden. Optional können die digitalisierten Werte auch im Mikrocontroller zu einem physikalischen Wert (z.B. einen Weg eines Pedals) verarbeitet werden. Daran anschließend kann dann dieser Wert über die Schnittstelle an das Zentral/Aktuator Steuergerät übertragen werden. Bei der Verarbeitung können zusätzlich eine Offsetkorrektur (Versatzkorrektur), eine Linearisierung, eine Kalibrierung mit Kalibrierdaten oder andere Verarbeitungsschritte erfolgen.

In weiteren Ausführungsbeispielen können für die Überprüfung/Berechnung im Zentral/Aktuator Steuergerät 200 die Kalibrierdaten auf Anforderung, beispielsweise bei EOL (end-of-line) Test, nach einem Wechsel der Sensoreinheit o.ä., beim Anschalten oder regelmäßig an das Zentral/Aktuator Steuergerät 200 übertragen werden. Werden die Kalibrierdaten aus Sicherheitsgründen mehrfach in dem Sensorsteuergerät abgelegt, können alle gespeicherten Kalibrierdaten oder nur die überprüften Kalibrierdaten übertragen werden. Zusätzlich kann eine nichtflüchtige Speicherung der Kalibrierdaten im Zentral/Aktuator Steuergerät 200 erfolgen. Damit kann eine Änderung der Kalibrierwerte geprüft werden. Aus der Änderung der Kalibrierwerte kann auf einen Fehler oder einen Austausch der Sensoreinheit geschlossen werden.

Die Verarbeitung des Sensorsignals 105 und des periodischen Signals 125 kann mit demselben Algorithmus wie die Berechnung eines der Sensorwerte erfolgen. Damit kann sichergestellt werden, dass die Berechnung über den gesamten Eingangsbereich korrekt durchgeführt wird (da der Verlauf periodisches Signal 125 bekannt ist).

Die zwei Sensorsignale 105a, 105b können durch unterschiedliche SW (Software) Teile berechnet werden. Dabei können verschiedene Realisierungen möglich sein. Beispielsweise kann der Algorithmus identisch sein, aber der Maschinencode ist durch unterschiedlich gewählte Compilereinstellungen verschieden. Ebenfalls möglich ist, dass der Algorithmus identisch ist, aber die Implementierung ist unterschiedlich. Ebenfalls möglich ist, dass der Algorithmus unterschiedlich ist. Eine Möglichkeit für unterschiedliche Algorithmen kann durch eine Berechnung durch eine Funktion und eine Berechnung durch look up table (Nachschlagetabelle) sein. Eine weitere Möglichkeit ist die Verwendung von unterschiedlichen Funktionen.

Bei Verwendung von unterschiedlichen Algorithmen oder Funktionen können neben Hardwarefehlern im Controller auch Fehler im Compiler und Fehler in der Programmierung erkannt werden.

In weiteren Ausführungsbeispielen erfolgt eine Prüfung von Gleichtaktfehlern ("Common Mode"-Fehler) der Analogwerte. Dies kann beispielsweise dadurch geschehen, dass deren Signale 105a, 105b gegenläufig sind, d.h. eine Änderung der zu messenden Größe ändert das Signal der beiden Sensoren gegensinnig. Damit ist es möglich, ein gleichsinniges Verfälschen beider Sensorwerte zu erkennen, da ein sich gleichsinnig auf beide Signale auswirkender Fehler zu einem nicht plausiblen Summensignal führt.

In weiteren Ausführungsbeispielen erfolgt eine Prüfung der Verbindung von Sensor 105 zum Mikrocontroller 130. Dies kann beispielsweise erreicht werden, indem die Sensoren 105 so ausgeführt sind, dass bei einem Kurzschluss des Signals ein ungültiger Wert erzeugt wird (z.B. durch unterschiedliche Impedanzen oder unterschiedliche Spannungs-/Strombereiche der Sensoren).

Außerdem kann der Kurzschluss der Sensorsignale geprüft werden, indem periodisch jeweils ein Sensor Signal mit einem definierten Signal verändert wird. Bei diesem Test darf sich nur ein Sensorsignal ändern. Ändern sich beide Sensorsignale besteht ein Kurzschluss.

Bei weiteren Ausführungsbeispielen erfolgt die Übertragung zum Steuergerät/Aktuator wie folgt. Die Übertragung der Daten erfolgt über eine digitale Schnittstelle 140. Die Daten können durch eine Prüfsumme (Checksumme) und einen Nachrichtenzähler (Message Counter) gesichert werden. Übertragen werden beispielsweise: Sensorsignal 105a, Sensorsignal 105b, Bekanntes Signal (Vergleichssignal 125), Nachrichtenzähler, Prüfsumme (z.B. CRC).

Bei weiteren Ausführungsbeispielen erfolgt die Prüfung im Steuergerät/Aktuator 200 wie folgt. Im Steuergerät/Aktuator 200 werden beispielsweise die folgenden Funktionen ausgeführt: Prüfung Nachrichtenzählers, Prüfung der Prüfsumme und Prüfung des periodisches Signal (Vergleichssignals 125) mit erwartetem Verlauf. Bei Störungen auf der Übertragung (ausbleibende Daten, verzögerte Daten) kann der Nachrichtenzähler zur Einengung des Überwachungsbereichs verwendet werden.

Durch das bekannte Signal (Vergleichssignal 125) ist sichergestellt, dass sich die Werte auf der Schnittstelle laufend ändern. Damit ist eine Prüfung der Verarbeitung in der Sensoreinheit und der Übertragungseinheit gewährleistet.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### Bezugszeichenliste

- 100: Sendevorrichtung
- 101: Aktuator
- 102: Sensor(en)
- 105: Sensorsignal(e)
- 110: Eingabeschnittstelle
- 113: Multiplexer
- 117: AD-Wandler
- 118: Steuersignal
- 119: digitales Signal
- 120: Signalgenerator
- 125: Vergleichssignal
- 130: Datenverarbeitungseinheit
- 131: erster Algorithmus
- 132: zweiter Algorithmus
- 133: dritter Algorithmus
- 134: Kombinierer
- 135: modifiziertes Sensorsignal
- 140: Ausgangsschnittstelle
- 150: Signalpfad
- 160: erste Zeitbasis
- 170: Überwachungseinheit
- 180: zweite Zeitbasis
- 190: Rückkopplungen
- 200: Empfangsvorrichtung
- 210: Eingangsschnittstelle
- 220: Erfassungseinheit
- 225: erfasstes Vergleichssignal
- 230: Auswerteeinheit
- 235: Fehlersignal
- 240: Fehlerdetektor

## Patentansprüche

1. Sendevorrichtung (100) zum Senden eines Sensorsignals (105) bezüglich einer physikalischen Größe, mit folgenden Merkmalen:
eine Eingangsschnittstelle (110) zur Eingabe des Sensorsignals (105);
einen Signalgenerator (120) zur Erzeugung eines Vergleichssignals (125);
eine Datenverarbeitungseinheit (130), die ausgebildet ist, um das Sensorsignal (105) und das Vergleichssignal (125) zu einem modifizierten Sensorsignal (135) zu kombinieren; und
eine Ausgangsschnittstelle (140), die an einen Signalpfad (150) koppelbar ist, um das modifizierte Sensorsignal (135) auszugeben,
wobei das Vergleichssignal (125) sich in vorbestimmter Weise über einen Wertebereich zeitlich ändert,
**dadurch gekennzeichnet, dass**
das Sensorsignal (105) eine erstes Sensorsignal (105a) und ein zweites Sensorsignal (105b) umfasst, die beide die physikalische Größe erfassen und die beide zueinander gegenläufig sind, so dass eine Änderung der physikalischen Größe zu gegenläufigen Auswirkungen auf das erste Sensorsignal (105a) und auf das zweite Sensorsignal (105b) führt, wobei die Datenverarbeitungseinheit (130) ausgebildet ist, um das erste Sensorsignal (105a) und das zweite Sensorsignal (105b) und das Vergleichssignal (125) zu verarbeiten und zu dem modifizierten Sensorsignal (135) zu kombinieren,
wobei das erste Sensorsignal (105a) Werte in einem ersten Sensorbereich und das zweite Sensorsignal (105b) Werte in einem zweiten Sensorbereich annehmen, wobei eine Mittelung von Werten des ersten Sensorbereiches mit Werten des zweiten Sensorbereiches zu Durchschnittswerten führt, die außerhalb des ersten Sensorbereiches und außerhalb des zweiten Sensorbereiches liegen, und die Datenverarbeitungseinheit (130) ausgebildet ist, um die Durchschnittswerte als ungültige Sensorwerte zu detektieren und einen Fehler auszugeben.

2. Sendevorrichtung (100) nach Anspruch 1, wobei das Sensorsignal (105) in Abhängigkeit von der physikalischen Größe Werte in einem Sensorbereich annimmt, und der Signalgenerator (120) ausgebildet ist, das Vergleichssignal (125) derart zu erzeugen, dass der Wertebereich den Sensorbereich umfasst.

3. Sendevorrichtung (100) nach Anspruch 1 oder Anspruch 2, die weiter einen Analog-Digital-Wandler (117) aufweist, der ausgebildet ist, das Sensorsignal (105) und das Vergleichssignal (125) in ein digitales Signal (119) auf gleiche Weise zu wandeln, wobei die Ausgangsschnittstelle (140) eine digitale Schnittstelle ist, um das digitale Signal (119) auszugeben, wobei der Signalgenerator (120) ausgebildet ist, um das Vergleichssignal (125) zeitlich periodisch mit einer vorbestimmten Periodendauer zu erzeugen, und wobei eine Abtastrate des Analog-Digital-Wandlers (117) und die Periodendauer derart gewählt sind, dass aufeinanderfolgende Abtastungen des Vergleichssignals (125) sich um nicht mehr als eine vorbestimmte Anzahl von Digitalisierungsschritten unterscheiden, wobei
die Datenverarbeitungseinheit (130) ausgebildet ist, die Periodendauer des Vergleichssignals (125) über ein Steuersignal (118) zu steuern,
wobei die Sendevorrichtung (100) weiter einen Multiplexer (113) aufweist, wobei der Multiplexer (113) ausgebildet ist, das Sensorsignal (105) und das Vergleichssignal (125) miteinander zu kombinieren und an den Analog-Digital-Wandler (117) auszugeben.

4. Sendevorrichtung (100) nach einem der vorhergehenden Ansprüche, die weiter eine Rückkopplung (190) von der Datenverarbeitungseinheit (130) zur Eingabe des ersten Sensorsignals (105a) und des zweiten Sensorsignals (105b) aufweist, um entweder das erste Sensorsignal (105a) oder das zweite Sensorsignal (105b) um einen vorbestimmten Wert zu ändern, und wobei die Datenverarbeitungseinheit (130) ausgebildet ist, einen Fehler festzustellen, wenn in Antwort auf die Änderung eines der beiden Sensorsignale (105a, 105b) sich beide Sensorsignale ändern.

5. Sendevorrichtung (100) nach einem der vorhergehenden Ansprüche, wobei die Datenverarbeitungseinheit (130) ausgebildet, um das erste Sensorsignal (105a) mit einem ersten Algorithmus (131) zu verarbeiten und das zweite Sensorsignal (105b) mit einem zweiten Algorithmus (132) zu verarbeiten und das Vergleichssignal (125) mit einem dritten Algorithmus (133) zu verarbeiten, wobei der erste Algorithmus (131) und der zweite Algorithmus (132) und der dritte Algorithmus (133) gleich sind oder der zweite Algorithmus (132) verschieden ist von dem ersten und dritten Algorithmus (131, 133),
wobei, wenn der erste bis dritte Algorithmus (131, 132, 133) gleich sind, der zweite Algorithmus einen anderen Maschinencode aufweist als der erste und dritte und dritten Algorithmus (131, 133) oder der gleiche Algorithmus für das zweite Sensorsignal (105b) im Vergleich zum ersten Sensorsignal (105a) und zum Vergleichssignal (115) verschieden implementiert ist.

6. Sendevorrichtung (100) nach einem der vorhergehenden Ansprüche,
wobei die Datenverarbeitungseinheit (130) weiter ausgebildet ist, um einen Nachrichtenzähler und/oder eine Kontrollsumme zu erzeugen und dem modifizierten Sensorsignal (135) hinzuzufügen, wobei der Nachrichtenzähler und die Kontrollsumme ausgebildet sind, um einen Fehler während einer Übertragung auf dem Signalpfad (150) zu detektieren und/oder zu lokalisieren, oder
wobei die Datenverarbeitungseinheit (130) ausgebildet ist, um eine Versatzkorrektur und/oder eine Linearisierung und/oder eine Kalibrierung des Sensorsignals (105) durchzuführen und die Kalibrierdaten zumindest einmal zu speichern.

7. Sendevorrichtung (100) nach einem der vorhergehenden Ansprüche, wobei die Datenverarbeitungseinheit (130) an eine erste Zeitbasis (160) koppelbar ist und eine Überwachungseinheit (170) aufweist, die an eine zweite Zeitbasis (180) koppelbar ist, wobei die Überwachungseinheit (170) ausgebildet ist, um einen Fehler infolge einer fehlerhaften Zeitbasis festzustellen, wozu die zweite Zeitbasis nutzbar ist, und eine entsprechende Fehlermeldung auszugeben.

8. Sendevorrichtung (100) nach einem der vorhergehenden Ansprüche, die ausgebildet ist, um das erste Sensorsignal (105a) von einem ersten Sensor (102a) und das zweite Sensorsignal (105b) von einem zweiten Sensor (102b) zu empfangen, wobei der erste Sensor (102a) und zweite Sensor (102b) einen Zustand einer Fahrzeugkomponente detektieren.

9. Empfangsvorrichtung (200) zum Empfangen eines modifizierten Sensorsignals (135) von einer Sendevorrichtung (100) nach einem der Ansprüche 1 bis 8, mit folgenden Merkmalen:
eine Eingangsschnittstelle (210), die koppelbar ist an den Signalpfad (150), um das modifizierte Sensorsignals (135) zu empfangen;
eine Erfassungseinheit (220) zum Erfassen des Vergleichssignals (225);
eine Auswerteeinheit (230) zur Auswertung des Vergleichssignals (125), wobei die Auswerteeinheit (230) Zugriff auf Informationen über ein gültiges Vergleichssignal (125) hat, um eine Ungültigkeit des Vergleichssignals (225) basierend auf einen Vergleich der Informationen zu dem erfassten Vergleichssignal (225) festzustellen; und
einen Fehlerdetektor (240), der ausgebildet ist, um einen Fehler festzustellen, wenn das Vergleichssignal (225) ungültig ist.

10. Empfangsvorrichtung (200) nach Anspruch 9, die weiter eine Einrichtung zum Abfragen von Kalibrierwerten aufweist, die ausgebildet ist, um Kalibrierwerte von der Sendevorrichtung (100) oder einem Speicher zu erfragen, um einen Wert der physikalischen Größe aus dem Sensorsignal (105) zu ermitteln.

11. Empfangsvorrichtung (200) nach Anspruch 9 oder Anspruch 10, wobei die Erfassungseinheit (220) ausgebildet ist, die Prüfsumme und/oder den Nachrichtenzähler aus dem modifizierten Sensorsignal (135) zu extrahieren, und die Auswerteeinheit (230) ausgebildet ist, um Störungen auf dem Signalpfad (150) aus Abweichungen in der Prüfsumme festzustellen und um fehlerhafte Abschnitte in dem modifizierten Sensorsignals (135) mittels des Nachrichtenzählers zu ermitteln, oder wobei die Auswerteeinheit (230) ausgebildet ist, um eine Form des gültigen Vergleichssignals (125) von der Sendevorrichtung (100) zu empfangen und zu speichern.

12. System mit:
einer Sendevorrichtung (100) nach einem der Ansprüche 1 bis 8;
einer Empfangsvorrichtung (200) nach einem der Ansprüche 9 bis 11; und
einem Signalpfad (150), der die Sendevorrichtung (100) mit der Empfangsvorrichtung (200) verbindet.

13. Fahrzeug mit einem Aktuator (101); einem Sensor (102) zur Erfassung einer Position des Aktuators (101); und einem System nach Anspruch 12,
wobei der Sensor (102) ausgebildet ist, um als Sensorsignal (105) eine Position eines Aktuators (101) zu erfassen, und das System ausgebildet ist, um das Sensorsignal sicher an eine elektronische Steuereinheit (ECU) zu übertragen.

14. Verfahren zum sicheren Übertragen eines Sensorsignals (105) bezüglich einer physikalischen Größe, wobei das Sensorsignal (105) eine erstes Sensorsignal (105a) und ein zweites Sensorsignal (105b) umfasst, die beide die physikalische Größe erfassen und die beide zueinander gegenläufig sind, so dass eine Änderung der physikalischen Größe zu gegenläufigen Auswirkungen auf das erste Sensorsignal (105a) und auf das zweite Sensorsignal (105b) führt, mit folgenden Schritten:
Erzeugen (S110) eines Vergleichssignals (125), das sich in vorbestimmter Weise über einen Wertebereich zeitlich ändert;
Kombinieren (S120) des Sensorsignals (105) und des Vergleichssignal (125) zu einem modifizierten Sensorsignal (135), wobei das erste Sensorsignal (105a) und das zweite Sensorsignal (105b) und das Vergleichssignal (125) verarbeitet und zu dem modifizierten Sensorsignal (135) kombiniert wird;
Übertragen (S130) des modifizierten Sensorsignals (135) über einen Signalpfad (150);
Empfangen (S140) des modifizierten Sensorsignals (135) durch einen Empfänger;
Erfassen (S150) des Vergleichssignals (225) aus dem modifizierten Sensorsignals;
Vergleichen (S160) des erfassten Vergleichssignals (225) mit Informationen über ein gültiges Vergleichssignal (125), um eine Ungültigkeit des erfassten Vergleichssignals (225) basierend auf dem Vergleich der Informationen zu dem erfassten Vergleichssignals (225) festzustellen; und
Feststellen (S170) eines Fehlers in der Übertragung des Sensorsignals (105), wenn das erfasste Vergleichssignal (225) ungültig ist,
wobei das erste Sensorsignal (105a) Werte in einem ersten Sensorbereich und das zweite Sensorsignal (105b) Werte in einem zweiten Sensorbereich annehmen,
wobei eine Mittelung von Werten des ersten Sensorbereiches mit Werten des zweiten Sensorbereiches zu Durchschnittswerten führt, die außerhalb des ersten Sensorbereiches und außerhalb des zweiten Sensorbereiches liegen, und die Datenverarbeitungseinheit (130) ausgebildet ist, um die Durchschnittswerte als ungültige Sensorwerte zu detektieren und einen Fehler auszugeben.

15. Computerprogramprodukt mit Programmcode zum Ausführen des Verfahrens nach Anspruch 14, wenn der Programmcode auf einem Prozessor ausgeführt wird.

## Claims

1. Transmission device (100) for transmitting a sensor signal (105) relating to a physical variable, having the following features:
an input interface (110) for inputting the sensor signal (105);
a signal generator (120) for generating a comparison signal (125);
a data processing unit (130) which is designed to combine the sensor signal (105) and the comparison signal (125) to form a modified sensor signal (135); and
wherein the comparison signal (125) changes over time in a predetermined manner over a range of values,
**characterised in that**
the sensor signal (105) includes a first sensor signal (105a) and a second sensor signal (105b), both of which record the physical variable and are contra-directional, with the result that a change in the physical variable leads to opposite effects on the first sensor signal (105a) and on the second sensor signal (105b), wherein the data processing unit (130) is designed to process the first sensor signal (105a) and the second sensor signal (105b) and the comparison signal (125) and combine them to form the modified sensor signal (135),
wherein the first sensor signal (105a) takes values in a first sensor range and the second sensor signal (105b) takes values in a second sensor range, wherein an averaging of values of the first sensor range with values of the second sensor range leads to average values which lie outside the first sensor range and outside the second sensor range, and the data processing unit (130) is designed to detect the average values as invalid sensor values and to output an error.

2. Transmission device (100) according to claim 1, wherein, depending on the physical variable, the sensor signal (105) takes values in a sensor range, and the signal generator (120) is designed to generate the comparison signal (125) such that the range of values includes the sensor range.

3. Transmission device (100) according to claim 1 or claim 2, furthermore comprising an analogue-digital converter (117) which is designed to convert the sensor signal (105) and the comparison signal (125) into a digital signal (119) in the same way, wherein the output interface (140) is a digital interface, in order to emit the digital signal (119), wherein the signal generator (120) is designed to generate the comparison signal (125) periodically over time with a predetermined period, and wherein a sampling rate of the analogue-digital converter (117) and the period are chosen such that successive samplings of the comparison signal (125) differ by not more than a predetermined number of digitisation steps, wherein the data processing unit (130) is designed to control the period of the comparison signal (125) via a control signal (118), wherein the transmission device (100) further comprises a multiplexer (113), wherein the multiplexer (113) is designed to combine the sensor signal (105) and the comparison signal (125) and to output them to the analog-digital converter (117).

4. Transmission device (100) according to any of the preceding claims, which further has a feedback (190) from the data processing unit (130) to the input of the first sensor signal (105a) and the second sensor signal (105b) in order to change either the first sensor signal (105a) or the second sensor signal (105b) by a predetermined value, and wherein the data processing unit (130) is designed to ascertain an error if both sensor signals change in response to the change of one of the two sensor signals (105a, 105b).

5. Transmission device (100) according to any of the preceding claims, wherein the data processing unit (130) is designed to process the first sensor signal (105a) with a first algorithm (131) and to process second sensor signal (105b) with a second algorithm (132) and to process the comparison signal (125) with a third algorithm (133), wherein the first algorithm (131) and the second algorithm (132) and the third algorithm (133) are the same or the second algorithm (132) is different from the first and third algorithms (131, 133),
wherein, if the first to third algorithms (131, 132, 133) are the same, the second algorithm has a different machine code from the first and third algorithms (131, 133), or the same algorithm for the second sensor signal (105b) is implemented differently compared with the first sensor signal (105a) and with the comparison signal (115).

6. Transmission device (100) according to any of the preceding claims,
wherein the data processing unit (130) is further designed to generate a message counter and/or a checksum and add it to the modified sensor signal (135), wherein the message counter and the checksum are designed to detect and/or locate an error during transmission on the signal path (150), or
wherein the data processing unit (130) is designed to carry out an offset correction and/or a linearisation and/or a calibration of the sensor signal (105) and to store the calibration data at least once.

7. Transmission device (100) according to any of the preceding claims, wherein the data processing unit (130) can be coupled to a first time base (160) and comprises a monitoring unit (170) which can be coupled to a second time base (180), wherein the monitoring unit (170) is designed to ascertain an error as a result of an erroneous time base, for which reason the second time base can be used, and to output a corresponding error message.

8. Transmission device (100) according to any of the preceding claims, which is designed to receive the first sensor signal (105a) from a first sensor (102a) and the second sensor signal (105b) from a second sensor (102b), wherein the first sensor (102a) and the second sensor (102b) detect a state of a vehicle component.

9. Receiving device (200) for receiving a modified sensor signal (135) from a transmission device (100) according to any of claims 1 to 8, having the following features:
an input interface (210) which can be coupled to the signal path (150) in order to receive the modified sensor signal (135);
a detection unit (220) for detecting the comparison signal (225);
an evaluation unit (230) for evaluating the comparison signal (125), wherein the evaluation unit (230) has access to information about a valid comparison signal (125) in order to ascertain an invalidity of the comparison signal (225) on the basis of a comparison of the information about the recorded comparison signal (225); and
an error detector (240) which is designed to detect an error if the comparison signal (225) is invalid.

10. Receiving device (200) according to claim 9, which further comprises a device for requesting calibration values which is designed to request calibration values from the transmission device (100) or a memory in order to ascertain a value of the physical variable from the sensor signal (105).

11. Receiving device (200) according to claim 9 or claim 10, wherein the detection unit (220) is designed to extract the checksum and/or the message counter from the modified sensor signal (135), and the evaluation unit (230) is designed to ascertain interferences on the signal path (150) from variations in the checksum and to ascertain erroneous sections in the modified sensor signal (135) by means of the message counter, or wherein the evaluation unit (230) is designed to receive and store a form of the valid comparison signal (125) from the transmission device (100).

12. System having:
a transmission device (100) according to any of claims 1 to 8,
a receiving device (200) according to any of claims 9 to 11; and
a signal path (150) which connects the transmission device (100) to the receiving device (200).

13. Vehicle with an actuator (101); a sensor (102) for recording a position of the actuator (101); and a system according to claim 12,
wherein the sensor (102) is designed to record a position of the actuator (101) as a sensor signal (105), and the system is designed to transmit the sensor signal securely to an electronic control unit (ECU).

14. Method for securely transmitting a sensor signal (105) relating to a physical variable, wherein the sensor signal (105) includes a first sensor signal (105a) and a second sensor signal (105b), both of which record the physical variable and are contra-directional, with the result that a change in the physical variable leads to opposite effects on the first sensor signal (105a) and on the second sensor signal (105b), the method comprising the following steps:
generating (S110) a comparison signal (125) which changes over time in a predetermined manner over a range of values;
combining (SI20) the sensor signal (105) and the comparison signal (125) to form a modified sensor signal (135), wherein the first sensor signal (105a) and the second sensor signal (105b) and the comparison signal (125) are processed and combined to form the modified sensor signal (135);
transmitting (130) the modified sensor signal (135) over a signal path (150);
receiving (SI40) the modified sensor signal (135) by a receiver;
extracting (S150) the comparison signal (225) from the modified sensor signal;
comparing (S160) the extracted comparison signal (225) with information about a valid comparison signal (125) in order to ascertain an invalidity of the recorded comparison signal (225) on the basis of the comparison of the information about the extracted comparison signal (225); and
ascertaining (S170) an error in the transmission of the sensor signal (105) if the recorded comparison signal (225) is invalid,
wherein the first sensor signal (105a) takes values in a first sensor range and the second sensor signal (105b) takes values in a second sensor range,
wherein an averaging of values of the first sensor range with values of the second sensor range leads to average values which lie outside the first sensor range and outside the second sensor range, and the data processing unit (130) is designed to detect the average values as invalid sensor values and to output an error.

15. Computer programme product having a programme code for executing the method according to claim 14, if the programme code is executed on a processor.

## Revendications

1. Dispositif (100) d'émission pour émettre un signal (105) de capteur concernant une grandeur physique ayant les caractéristiques suivantes :
une interface(110) d'entrée pour l'entrée du signal (105) de capteur;
un générateur (120) de signal pour produire un signal (125) de comparaison;
une unité (130) de traitement de données, constituée pour combiner le signal (105) de capteur et le signal (125) de comparaison en un signal (135) de capteur modifié et
une interface (140) de sortie, qui peut être couplée à un trajet (150) de signal pour sortir le signal (135) de capteur modifié,
dans lequel le signal (125) de comparaison se modifie en fonction du temps d'une façon déterminée à l'avance sur une plage de valeurs,
**caractérisé en ce que**
le signal (105) de capteur comprend un premier signal (105a) de capteur et un deuxième signal (105b) de capteur, qui détectent tous deux la grandeur physique et qui tous deux sont opposés l'un à l'autre, de manière à ce qu'une variation de la grandeur physique donne des effets contraires sur le premier signal (105a) de capteur et le deuxième signal (105b) de capteur, l'unité (130) de traitement de données étant constituée pour traiter le premier signal (105a) de capteur et le deuxième signal (105b) de capteur et le signal (125) de comparaison et pour les combiner en le signal (135) de capteur modifié,
dans lequel le premier signal (105a) de capteur prend des valeurs dans une première plage du capteur et le deuxième signal (105b) de capteur prend des valeurs dans une deuxième plage du capteur, une moyenne des valeurs de la première plage du capteur avec des valeurs de la deuxième plage du capteur donnant des valeurs moyennes, qui se trouvent à l'extérieur de la première plage du capteur et à l'extérieur de la deuxième plage du capteur, et l'unité (130) de traitement de données est constituée pour détecter les valeurs moyennes comme étant des valeurs de capteur non valables et pour indiquer une erreur.

2. Dispositif (100) d'émission suivant la revendication 1, dans lequel le signal (105) de capteur prend, en fonction de la grandeur physique, des valeurs dans une plage de capteur et le générateur (120) de signal est constitué pour produire le signal (125) de comparaison, de manière à ce que la plage de valeurs comprenne la plage du capteur.

3. Dispositif (100) d'émission suivant la revendication 1 ou la revendication 2, qui comporte, en outre, un convertisseur (117) analogique-numérique constitué pour transformer de la même façon le signal (105) de capteur et le signal (125) de comparaison en un signal (119) numérique, l'interface (140) de sortie étant une interface numérique pour sortir le signal (119) numérique, le générateur (120) de signal étant constitué pour produire le signal (125) de comparaison, d'une manière périodique dans le temps, à une période définie à l'avance et dans lequel un taux d'échantillonnage du convertisseur (117) analogique-numérique et la période sont choisis, de manière à ce que des échantillonnages successifs du signal (125) de comparaison se distinguent de pas plus d'un nombre déterminé à l'avance de stades de numérisation, l'unité (130) de traitement de données étant constituée pour commander la période du signal (125) de comparaison par un signal (118) de commande,
le dispositif (100) d'émission ayant, en outre, un multiplexeur (113), le multiplexeur (113) étant constitué pour combiner entre eux le signal (105) de capteur et le signal (125) de comparaison et les sortir sur le convertisseur (117) analogique-numérique.

4. Dispositif (100) d'émission suivant l'une des revendications précédentes, qui a, en outre, une réaction (190) de l'unité (130) de traitement de données pour l'entrée du premier signal (105a) de capteur et du deuxième signal (105b) de capteur, et pour modifier, d'une valeur déterminée à l'avance, ou bien le premier signal (105a) de capteur, ou bien le deuxième signal (105b) de capteur, et dans lequel l'unité (130) de traitement de données est constituée pour constater une erreur si, en réponse à la modification de l'un des deux signaux (105a, 105b) du capteur, les deux signaux du capteur se modifient.

5. Dispositif (100) d'émission suivant l'une des revendications précédentes, dans lequel l'unité (130) de traitement de données est constituée pour traiter le premier signal (105a) de capteur par un premier algorithme (131) et pour traiter le deuxième signal (105b) de capteur par un deuxième algorithme (132) et pour traiter le signal (125) de comparaison par un troisième algorithme (133), le premier algorithme (131) et le deuxième algorithme (132) et le troisième algorithme (133) étant pareils ou le deuxième algorithme (132) étant différent du premier et du troisième algorithmes (131, 133),
dans lequel, lorsque le premier au troisième algorithmes (131, 132, 133) sont pareils, le deuxième algorithme a un autre code machine que le premier et le troisième algorithmes (131, 133) ou le même algorithme est mis en oeuvre de manière différente pour le deuxième signal (105b) de capteur par rapport au premier signal (105a) de capteur et au signal (115) de comparaison.

6. Dispositif (100) d'émission suivant l'une des revendications précédentes,
dans lequel l'unité (130) de traitement de données est constituée, en outre, pour produire un compteur de messages et/une somme de contrôle et pour l'ajouter au signal (135) de capteur modifié, le compteur de messages et la somme de contrôle étant constitués pour détecter et/ou pour localiser une erreur pendant une transmission sur le trajet (150) du signal ou
dans lequel l'unité (130) de traitement de données est constituée pour effectuer une correction de décalage et/ou une linéarisation et/ou un étalonnage du signal (105) de capteur et pour mémoriser au moins une fois les données d'étalonnage.

7. Dispositif (100) d'émission suivant l'une des revendications précédentes, dans lequel l'unité (130) de traitement de données peut être couplée à une première base (160) de temps et à une unité (170) de contrôle, qui peut être couplée à une deuxième base (180) de temps, l'unité (170) de contrôle étant constituée pour constater une erreur à la suite d'une base de temps défectueuse, la deuxième base de temps pouvant être utilisée pour sortir un message d'erreur correspondant.

8. Dispositif (100) d'émission suivant l'une des revendications précédentes, constitué pour recevoir le premier signal (105a) de capteur d'un premier capteur (102a) et le deuxième signal (105b) de capteur d'un deuxième capteur (102b), le premier capteur (102a) et le deuxième capteur (102b) détectant un état d'un composant de véhicule.

9. Dispositif (200) de réception pour recevoir un signal (135) de capteur modifié d'un dispositif (100) d'émission suivant l'une des revendications 1 à 8, ayant les caractéristiques suivantes :
une interface (210) d'entrée, qui peut être couplée au trajet (250) du signal pour recevoir le signal (135) de capteur modifié;
une unité (220) de détection pour détecter le signal (225) de comparaison;
une unité (230) d'exploitation pour exploiter le signal (125) de comparaison, l'unité (230) d'exploitation ayant accès à des informations sur un signal (125) de comparaison valable, afin de constater une invalidité du signal (225) de comparaison sur la base d'une comparaison des informations au signal (225) de comparaison détecté et
un détecteur (240) d'erreur, constitué pour constater une erreur si le signal (225) de comparaison n'est pas valable.

10. Dispositif (200) de réception suivant la revendication 9, qui a, en outre, un dispositif de demande de valeurs d'étalonnage, constitué pour demander des valeurs d'étalonnage au dispositif (100) d'émission ou à une mémoire, afin de déterminer une valeur de la grandeur physique à partir du signal (105) de capteur.

11. Dispositif (200) de réception suivant la revendication 9 ou la revendication 10, dans lequel l'unité (220) de détection est constituée pour extraire la somme de contrôle et/ou le compteur de messages du signal (135) de capteur modifié et l'unité (230) d'exploitation est constituée pour constater des perturbations sur le trajet (150) du signal à partir d'écarts dans la somme de contrôle et pour déterminer, au moyen du compteur de messages, des parties défectueuses dans le signal (135) de capteur modifié, ou dans lequel l'unité (230) d'exploitation est constituée pour recevoir du dispositif (100) d'émission et pour mémoriser une forme du signal (125) de comparaison valable.

12. Système, comprenant :
un dispositif (100) d'émission suivant l'une des revendications 1 à 8;
un dispositif (200) de réception suivant l'une des revendications 9 à 11 et
un trajet (150) de signal, qui relie le dispositif (100) d'émission au dispositif (200) de réception.

13. Véhicule comprenant un actionneur (101), un capteur (102) de détection d'une position de l'actionneur (101) et un système suivant la revendication 12,
dans lequel le capteur (102) est constitué pour détecter comme signal (105) de capteur une position d'un actionneur (101) et le système est constitué pour transmettre le signal du capteur de manière sécurisée à une unité (ECU) électronique de commande.

14. Procédé de transmission sécurisée d'un signal (105) de capteur concernant une grandeur physique, le signal (105) de capteur comprenant un premier signal (105a) de capteur et un deuxième signal (105b) de capteur, qui détectent tous deux la grandeur physique et qui sont opposés l'un à l'autre, de manière à ce qu'une variation de la grandeur physique donne des effets contraires sur le premier signal (105a) de capteur et sur le deuxième signal (105b) de capteur, comprenant les stades suivants :
production (S10) d'un signal (125) de comparaison, qui varie dans le temps sur une plage de valeurs d'une façon déterminée à l'avance;
combinaison (S120) du signal (105) de capteur et du signal (125) de comparaison en un signal (135) de capteur modifié, le premier signal (105a) de capteur et le deuxième signal (105b) de capteur et le signal (125) de comparaison étant traités et combinés en le signal (135) de capteur modifié;
transmission (S130) du signal (135) de capteur modifié par un trajet (150) du signal;
réception (S140) du signal (135) de capteur modifié par un récepteur;
détection (S150) du signal (225) de comparaison à partir du signal de capteur modifié;
comparaison (S160) du signal (225) de comparaison détecté à des informations sur un signal (125) de comparaison valable pour constater une invalidité du signal (225) de comparaison détecté, sur la base de la comparaison des informations au signal (225) de comparaison détecté et constatation (S170) d'une erreur dans la transmission du signal (105) de capteur si le signal (225) de comparaison détecté n'est pas valable,
dans lequel le premier signal (105a) de capteur prend des valeurs dans une première plage du capteur et le deuxième signal (105b) de capteur prend des valeurs dans une deuxième plage du capteur, une moyenne des valeurs de la première plage du capteur avec des valeurs de la deuxième plage du capteur donnant des valeurs moyennes, qui se trouvent à l'extérieur de la première plage du capteur et à l'extérieur de la deuxième plage du capteur, et l'unité (130) de traitement de données est constituée pour détecter les valeurs moyennes comme étant des valeurs de capteur non valables et pour indiquer une erreur.

15. Produit de programme d'ordinateur ayant des codes de programme pour exécuter le procédé suivant la revendication 14, lorsque le code de programme est réalisé sur un processeur.
